(19) Europäisches Patentamt
European Patent Office
Office européen des brevets

(11) **EP 1 904 971 B1**

(12) **EUROPEAN PATENT SPECIFICATION**

(45) Date of publication and mention
of the grant of the patent:
**27.01.2010 Bulletin 2010/04**

(51) Int Cl.:
***G06T 5/50*** *(2006.01)*

(21) Application number: **06764958.2**

(22) Date of filing: **14.07.2006**

(86) International application number:
**PCT/GB2006/002610**

(87) International publication number:
**WO 2007/010206 (25.01.2007 Gazette 2007/04)**

(54) **Method and computer program for spatial compounding of images**

Verfahren und Computerprogramm zur räumlichen Vereinigung von Bildern

PROCEDE ET PROGRAMME INFORMATIQUE DESTINES A LA COMPOSITION SPATIALE D'IMAGES

(84) Designated Contracting States:
**AT BE BG CH CY CZ DE DK EE ES FI FR GB GR HU IE IS IT LI LT LU LV MC NL PL PT RO SE SI SK TR**

(30) Priority: **18.07.2005 GB 0514715**

(43) Date of publication of application:
**02.04.2008 Bulletin 2008/14**

(73) Proprietor: **ISIS INNOVATION LIMITED**
**Summertown,**
**Oxford OX2 7SG (GB)**

(72) Inventors:
• **GRAU, Vicente**
**Oxford OX1 3PJ (GB)**
• **NOBLE, Julia, Alison**
**Oxford OX1 3PJ (GB)**

(74) Representative: **Merryweather, Colin Henry**
**J.A. Kemp & Co.**
**14 South Square**
**Gray's Inn**
**London WC1R 5JJ (GB)**

(56) References cited:
• **GRAU V ET AL: "Adaptive multiscale ultrasound compounding using phase information" MEDICAL IMAGE COMPUTING AND COMPUTER-ASSISTED INTERVENTION-MICCAI 2005. 8TH INTERNATIONAL CONFERENCE. PROCEEDINGS, PART I (LECTURE NOTES IN COMPUTER SCIENCE VOL.3749) SPRINGER-VERLAG BERLIN, GERMANY, 2005, pages 589-596, XP019021685 ISBN: 3-540-29327-2**
• **LEOTTA D F ET AL: "Three-dimensional spatial compounding of ultrasound scans with weighting by incidence angle" ULTRASONIC IMAGING DYNAMEDIA USA, vol. 22, no. 1, January 2000 (2000-01), pages 1-19, XP009071717 ISSN: 0161-7346**
• **WILHJELM J E ET AL: "VISUAL AND QUANTITATIVE EVALUATION OF SELECTED IMAGE COMBINATION SCHEMES IN ULTRASOUND SPATIAL COMPOUND SCANNING" IEEE TRANSACTIONS ON MEDICAL IMAGING, IEEE SERVICE CENTER, PISCATAWAY, NJ, US, vol. 23, no. 2, February 2004 (2004-02), pages 181-190, XP001238185 ISSN: 0278-0062**

**Description**

The present invention relates to imaging using imaging techniques such as ultrasound echo imaging, and in particular to the combination of images of a common object.

Ultrasound pulse-echo imaging involves imaging of an object using an analysis beam of ultrasound. The echo signal is detected to generate an image. An important type of ultrasound echo imaging is echocardiography. Several imaging techniques (X-ray, angiography and MRI) have proven proven to be useful in cardiology, but echocardiography presents unique characteristics that make it the most commonly applied imaging diagnostic technique in clinical practice.

Traditionally, two-dimensional (2D) echocardiography has been used widely as a relatively cheap, portable and real-time interactive assessment of heart function. Using a 2D imaging modality introduces disadvantages such as the difficulty to characterize three-dimensional structures or the dependence on the probe position, which makes it difficult to compare images if acquired by different clinicians or at different times.

Recently developed technology has allowed, for the first time, to acquire three-dimensional (3D) ultrasound echo images of the heart in real time. This new imaging modality opens a wide range of possibilities for echocardiography in clinical routine. However, at its present stage, due to the limited field of view of the transducer, it is not possible to scan the whole adult heart in a single acquisition (and, in some cases, not even the left ventricle). Furthermore, some cardiac structures can be appreciated only from particular acoustic windows. For this reason, a complete diagnostic study in real time 3D ultrasound (RT3DUS) will consist of more than one acquisition acquired from different positions. The development of tools to combine these acquisitions and present a single, optimal dataset to the clinician could greatly improve the clinical uses of the technology.

In general, it is known to combine ultrasound images acquired with the same or different orientation of the analysis beam relative to the image, as a way to improve image quality, mainly through speckle reduction. Usually, simple techniques are used to combine the images, such as taking the mean or the maximum intensity at each pixel. This is often referred to as compounding the images.

However, whilst such known techniques for combining images can reduce speckle and other noise, they can result in the reduction of the information content. This is because the quality of the images can vary depending on a number of factors. Examples of such factors in ultrasound echo imaging are the nature of the ultrasound transducer used, the acoustic properties of the object being imaged, the conditions during image acquisition and the alignment between the object and the ultrasound analysis beam. Variance in the image quality between images means that the known techniques can cause high quality information in one of the images to be masked by low quality information in another one of the images, resulting in a net reduction in the information content in some parts of the combined image. This affects visualisation and the quality of image analysis which can be performed, for example by a clinician in the case of an echocardiography image or other clinical image.

It would be desirable to obtain combined images in which these problems are reduced.

Leotta et al., "Three-Dimensional Spatial Compounding of Ultrasound Scans with Weighting by Incidence Angle", Ultrasonic Imaging, Vol. 22, No. 1, January 2000, pp. 1-19 disclose a method of combining a plurality of images of a common object which images are in registration with each other and have been acquired using an ultrasound imaging technique which is dependent on the angle of the ultrasound beam relative to the object. The method comprises:

   deriving, in respect of each image, measures of the gradient in the direction of the ultrasound beam;
   deriving, in respect of each image, binary surfaces, by thresholding the gradient and performing morphological filtering;
   deriving, in respect of each image, vectors normal to the derived surfaces;
   deriving, in respect of each image, alignment measures of the angle between the normal to said surfaces and the ultrasound beam;
   determining, in respect of each pixel, relative weights for the plurality of images in correspondence with the feature measures for the plurality of images in respect of the corresponding pixel, taking into account the alignment measures for the plurality of images; and
   producing a combined image by combining the corresponding pixels of each image in accordance with the determined relative weights.

According to the present invention, there is provided a method of combining a plurality of images of a common object which images are in registration with each other and have been acquired using an imaging technique which uses an analysis beam and is dependent on the angle of the analysis beam, relative to the object, the method comprising:

   deriving, in respect of each image, feature measures in respect of each pixel, being measures of the degree of detection of a phase feature which is invariant with the local contrast of the image;
   deriving, in respect of each image, alignment measures in respect of each pixel, being measures of the degree of alignment between the normal to said feature and the analysis beam;

determining, in respect of each pixel of the plurality of images, relative weights in respect of the plurality of images based on the feature measures in respect of the pixel in the plurality of images, taking into account the alignment measures in respect of the pixel in the plurality of images; and

producing a combined image by combining the corresponding pixels of each image in accordance with the determined relative weights.

This method provides a combined image in which the information content from the plurality of images is maximised. Hence the combined image is of better quality for the purpose of subsequent visualisation and image analysis, for example by a clinician. This is achieved by the use of the feature measures and the alignment measures to derive relative weights in accordance with which the images are combined. As the relative weights are determined in respect of each pixel, different images having a better definition of features may predominate in different areas of the combined image so that the overall information content is improved.

The use of a feature measure which detects a phase feature which is invariant with the local contrast of the image allows a proper comparison between different images which may have different contrast either globally due to some parameter of the acquisition or locally due to effects such as attenuation of the analysis beam. A particularly suitable type of phase feature is a phase congruency measure.

Use of the alignment measures allows account to be taken of the dependence of image quality on the alignment between the normal to the features and the analysis beam. This dependence arises in ultrasound echo imaging because ultrasound echoes get weaker as the alignment decreases and vice versa, but similar dependence is seen in other imaging techniques also. Thus the present method allows the combination of images taken with different views in a manner that the high quality information acquired from each view may be retained in the combined image.

Validation of the present method on both phantom ultrasound echo images and actual RT3DUS cardiac images has shown significant improvement over the known compounding techniques mentioned above. This validation is discussed further below.

The combined image may be used in a variety of manners including general tasks such as display, segmentation, tracking etc. However, the improved quality of the images facilitates their particular application to more complicated tasks such as object recognition and in image-guided intervention, for example to align images acquired during the intervention using the combined image as a reference.

To allow better understanding, an embodiment of the present invention will now be described by way of non-limitative example with reference to the accompanying drawings, in which:

Fig. 1 is a flow chart of a method of combining ultrasound echo images;
Figs. 2(a) to 2(e) are simulated images showing the application of the method of Fig. 1; and
Figs. 3(a) to 3(e) are RT3DUS images showing the application of the method of Fig. 1.

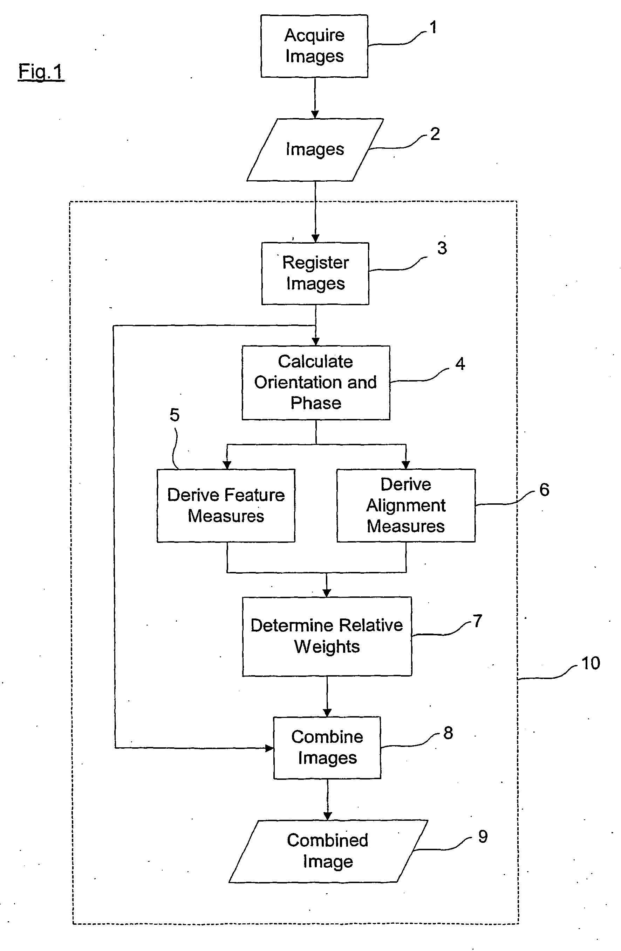

The embodiment of the present invention shown in Fig. 1 is a method of combining images of a common object acquired using an imaging technique in general but has particular application to ultrasound echo imaging and in particular RT3DUS imaging. As such the method may be applied with advantage to echocardiography images.

In step 1, a plurality of images 2 of a common object are acquired using the imaging technique in question. Typically the object is a part of a human body such as the heart. The acquisition may be performed using known techniques with appropriate apparatus.

The images 2 may consist of a set of images acquired in close succession, for example a set of views acquired using the same imaging apparatus to constitute a complete diagnostic study. Alternatively, the images 2 may include images acquired at different times.

The images 2 include different views, that is where the image is acquired using an analysis beam with a different alignment relative to the object being imaged. Where plural images 2 are acquired with the same view, each image may be used separately or they may be compounded using known techniques such as averaging and the resultant compound image used as one of the plurality of images 2.

Each image is represented by a set of values for respective pixels, typically being intensity values. In general, the images 2 may be 2D images or 3D images representing points in two or three spatial dimensions, or the images 2 may additionally represent points in time as an additional dimension. The method is particularly applicable to RT3DUS images. In the case of 3D images, the individual points are often referred to as voxels, but herein the term "pixel" is being used to refer to points in images of any dimensionality.

The images 2 acquired in step 1 are processed in steps 3 to 8 which are conveniently performed by a computer program executed on a computer system 10 illustrated schematically by a dotted line in Fig. 1. The computer system 10 may be any type of computer system but is typically a conventional personal computer. The computer program may be written in any suitable programming language. The computer program may be stored on a computer-readable storage medium, which may be of any type, for example: a recording medium which is insertable into a drive of the computing system and which may store information magnetically, optically or opto-magnetically; a fixed recording medium of the computer system such as a hard drive; or a computer memory.

As an alternative, the computer system 10 could be a system dedicated to the present analysis, for example associated with a system used to acquire the images 2 in step 1. In this case the computer system 10 could be optimised for performing the analysis, for example by running various processes in parallel.

In step 3, the plurality of images 2 are registered with each other. Step 3 is optional in that the images 2 may already be registered with each other by a physical technique employed in the acquisition of the images 2 in step 1. If this is not the case, then in step 3, registration is achieved by processing of the images 2 themselves. This may be done by any of the large number of known registration techniques which exist, for example as disclosed in, *inter alia,* Rohling, Gee & Berman. "3-D spatial compounding of ultrasound images", Medical Image Analysis, Oxford University Press, Oxford, UK, 1(3), pp. 177-193, 1997 or Xiao, Brady, Noble, Burcher & English, "Non-rigid registration of 3D free-hand ultrasound images of the breast", IEEE Transactions on Medical Imaging 21(4), p. 404-412, 2002.

In step 4, measures of phase and orientation are calculated in respect of each pixel. This is performed using a phase-based analysis of the images. In particular, each image is transformed into a monogenic signal image in the manner described below.

The following general points may be helpful. Phase-based analysis has been proposed as an alternative to intensity-based analysis for many image processing tasks, for example as discussed in Morrone & Owens, "Feature detection from local energy", Pattern Recognition Letters, 6:303-313, 1987. Phase provides invariance to changes in brightness and contrast within the image. This contrast-invariance property makes it particularly fit for ultrasound images, in which beam attenuation is present and echo intensity depends on the angle of incidence of the ultrasound beam.

Local phase is usually calculated by combining the output of a set of filters with different angles, but in the present method phase is derived from a monogenic signal of the type disclosed in Felsberg & Sommer, "The monogenic signal", IEEE Transactions on Signal Processing, 49(12):3136-3144, December 2001. The monogenic signal is an isotropic extension of the analytic signal which preserves its basic properties.

Analogous to the analytic signal for 1D, the monogenic signal is built by combining the original signal with the Riesz transform, a generalization of the Hilbert transform for higher dimensional signals. The Riesz transform of an N-dimensional image is obtained, in the frequency domain, by multiplying the original image with the set of filters $H_i$:

$$H_i(u) = \frac{u_i}{|u|}, \tag{1}$$

where $u=[u_1...u_N]^T$, with $u_i$ representing the ith coordinate unit vector; there are thus as many filters as image dimensions. By way of example in the 2D case, the set of filters $H_1$ and $H_2$ are:

$$H_1(u) = \frac{x}{\sqrt{x^2 + y^2}}$$

$$H_2(u) = \frac{y}{\sqrt{x^2 + y^2}} \tag{2}$$

The monogenic signal is then formed by the original image and the Riesz transform, so the Riesz transform of an N-dimensional signal is formed by N+1 N-dimensional signals, i.e. an N-dimensional vector is assigned to each original point (the *phase* vector). The length of this vector is the local amplitude of the monogenic signal, and the orientation angles correspond to the local phase and the local structure orientation. By way of example in the 2-D case, these values are:

$$f(x,y) = A(f(x,y))\cos(\varphi)$$
$$(h_1 * f(x,y)) = A(f(x,y))\sin(\varphi)\cos(\theta) \tag{3}$$
$$(h_2 * f(x,y)) = A(f(x,y))\sin(\varphi)\sin(\theta)$$

where $h_i(x)$ is the inverse Fourier transform of $H_i(u)$, $\phi$ and $\theta$ are the phase and local orientation angle, respectively, and $A(f(x,y))$ is the amplitude of the monogenic signal given by the equation:

$$A\left(f\left(x,y\right)\right) = \sqrt{f\left(x,y\right) + \sum_{i=1}^{N} h_i\left(x,y\right) * f\left(x,y\right)} \qquad (4)$$

In general, to be able to get the values localized in the frequency domain, filters H(u) are multiplied by a set of band-pass filters G(u).

Whilst the explanation given above assumes that the original image is transformed, in fact in step 4 each image is transformed into a monogenic signal in each of a plurality of spatial frequency bands. This produces a multi-scale representation. The monogenic signal in each frequency band will be denoted by a subscript s. This is because it is useful to localize features both in space and in frequency. To achieve this purpose, respective spatial band-pass filters $G_s(u)$ are combined with the $H_i(u)$ filter in equation (1). For example, in the above equations $H_i(u)$ is replaced by the combined filter $H_i(u).G_s(u)$ in respect of each frequency band or scale s. This has the same effect as first filtering the image signals into each of the spatial frequency bands with a bank of band-pass spatial frequency filters, and then transforming each spatial frequency band of each image into a monogenic signal image.

In general the spatial band-pass filters $G_s(u)$ may be of any form, for example one of the alternatives disclosed in Boukerroui, Noble and Brady, "On the Choice of Band-Pass Quadrature Filters", Journal of Mathematical Imaging and Vision, 21(1):53-80, July 2004. It is presently preferred to use a Difference of Gaussians (DoG) filter because this allows easy recombination of the spatial frequency bands. Similarly the number S of spatial frequency bands and the bandwidths may be freely chosen to suit the nature of the image. In the tests of the method reported below, the number S of band-pass filters was 5 and the bandwidths were equal.

In step 5, a phase congruency feature is detected from each of the images 2. Each spatial frequency band corresponds to a different scale in the original images 2. The evolution of phase along different scales can be used as a clue to differentiate image features from noise. One of the possibilities that have been proposed for this purpose is phase congruency. This parameter quantifies phase change over different scale; a high value corresponds to a consistent phase value and is thus an indicator of an image feature.

Thus in step 5, in respect of each image there are derived feature measures P in respect of each pixel which feature measures are measures of a phase congruency feature.

In general, phase congruency may be defined in accordance with the following equation:

$$PC(x,y) = \max_{\overline{\varphi}(x) \in [0,2\pi]} \frac{\sum_n f_n \cos\left(\varphi_n - \overline{\varphi}\right)}{\sum_n f_n} \qquad (5)$$

where n denotes the scale, $f_n$ is the n-th Fourier component of the original image signal. However, in accordance with the alternative way to calculate phase congruency disclosed in Morrone & Owens, "Feature detection from local energy", Pattern Recognition Letters, 6:303-313, 1987, the feature measures P for each image may be calculated from the amplitudes of the monogenic signal $A_s$ in each spatial frequency band in accordance with the following equation:

$$PC(x) = \max_{\overline{\varphi}} \frac{\sum_n A_n \cos\left(\varphi_n - \overline{\varphi}\right)}{\sum_n A_n} \qquad (6)$$

where $A_s$ are the signal amplitudes of the monogenic signal at the different scales s and $\phi_s$ are the phase values at different scales s.

More specifically, the feature measures P for each image may be calculated from the amplitudes of the monogenic signal $A_s$ in each spatial frequency band in accordance with the following equation:

$$PC(x,y) = \frac{\left\lfloor E(x,y) - T \right\rfloor}{\sum_{n=1}^{s} A_n(x,y) + \varepsilon} \tag{7}$$

where $E(x,y)$ is the local energy, the symbol [.] denotes a "soft threshold" (i.e. the result equals the enclosed quantity if it is bigger than zero, and is zero otherwise), T is a threshold value used to minimize the effect of noise, and $\in$ is a small constant added to avoid division by zero. By way of example in the 2D case, $E(x,y)$ is calculated as:

$$E(x,y) = \sqrt{\left(\sum_n A_n(x,y)\right)^2 + \left(\sum_n \sqrt{(h_1(x,y)*f(x,y))^2 + (h_2(x,y)*f(x,y))^2}\right)^2} \tag{8}$$

More details of the derivation of a phase congruency feature which may be applied to the present invention are given in Kovesi, "Phase congruency: A low-level image invariant", Psychological Research, Springer-Verlag, Vol. 64, No. 2, 2000, pp 136-148.

In step 6, the degree of alignment between the normal to the phase congruency feature and the analysis beam is determined. In particular, there are derived in respect of each image alignment measures in respect of each pixel and in respect of each spatial frequency band or scale denoted by a subscript s. The alignment measures are derived from the orientation $\theta_s$ of the monogenic signal in each of the spatial frequency bands or scales s, as derived in step 4. In particular, the alignment measures $M_s$ in respect of each spatial frequency band or scale s are calculated as $M_s = \cos(\theta_s - \phi)$, where $\phi$ is the angle of the analysis beam. $\theta_s$ and $\phi$ are both defined relative to the same axis which is fixed relative to the object being imaged but is otherwise arbitrary. In this way, Ms quantifies how well aligned are the ultrasound beam and the normal to the phase congruency feature at each pixel. It is also important to note that, in the present multi-scale approach, a pixel can have different orientations when studied at different scales. In this way, the alignment measures are considered at the scale at which the particular structure is defined. Of course the feature measure $M_s$ is derived in respect of each image so may more completely be denoted by $M_{is}$ where i indexes the images 2.

In step 7, relative weights $\lambda_{is}$ are determined in respect of each image denoted by the subscript i and in respect of each spatial frequency band or scale s. Before describing the derivation of the relative weights $\lambda_{is}$ in detail, an explanation of the basis of the derivation will be given.

When acquiring images 2 from different angles, important image structures can be much better defined in certain views, and in this case averaging reduces structure definition. The aim of the combination method is to maximize the information content of the combined images 2. This is done by discriminating between areas that contain well-defined features and areas which merely contain speckle, on the basis of the feature measures $P_i$ of each image 2. The feature measures $P_i$ are a suitable measure to discriminate speckle from anatomical structures, because as described above well-defined features can be identified by small scale-space change behaviour, while in the case of speckle the phase can suffer important variations. Accordingly, the relative weights $\lambda_{is}$ are determined in correspondence with the feature measures $P_i$ of each image 2.

Furthermore, account is taken of the alignment measures $M_{is}$. It is well known that the backscattered energy and thus the ultrasound image appearance depend on the alignment between the analysis beam and the normal to the feature at the incidence point. Averaging the intensities acquired from two different views is not an optimal solution, as it would degrade the strong echoes generated by a small incidence angles by introducing weaker echoes from more oblique incidences. Accordingly the relative weights $\lambda_{is}$ are determined taking into account the alignment measures $M_{is}$ to positively weight images 2 in correspondence with the alignment measure $M_{is}$.

The relative weights $\lambda_{is}$ are determined in step 7 based on the principles set out above in the following manner. Based on these principles, the following rules are applied separately to each pixel, to identify the characteristics of the pixel, and thus select the best strategy for combining the images 2 at the pixel:

-    If the feature measure $P_i$ of one image 2 is relatively high but the feature measures $P_i$ of the other images 2 are relatively low, the image 2 having a high feature measure $P_i$ should predominate. In this case, the relative weights $\lambda_{is}$ are determined in correspondence with the feature measures $P_i$ for the plurality of images.
-    If the feature measures $P_i$ of a group of plural images 2 are relatively high, the images 2 having a high feature measure $P_i$ should predominate over the images having a low feature measure $P_i$, if there are any. In this case, the relative weights $\lambda_{is}$ are determined in correspondence with the feature measures $P_i$ for the plurality of images 2 biased by the alignment measures $M_{is}$ for the group of plural images 2 (so that those images 2 in which the feature at the pixel is better aligned will contribute a higher amount to the combination).

- If the feature measures $P_i$ of all the images 2 are relatively low, the pixel is treated as speckle, so the average value should be taken. In this case, the relative weights $\lambda_{is}$ are made equal. Optionally, speckle may be reduced by multiplying the average value by a factor $\alpha$ which can be selected to have any value in the range $0 \leq \alpha \leq 1$

Thus, the feature measures $P_i$ are treated as the primary condition, and only in the case that it is not sufficient to determine whether a given pixel should be used, the alignment measures $M_{is}$ are considered.

Whilst the conditions described above could be applied to select one of a set of discrete values for the relative weights $\lambda_{is}$, in step 7 the relative weights $\lambda_{is}$ are actually calculated as a function of the feature measures $P_i$ and the alignment measures $M_{is}$ to provide a continuum of values for the relative weights $\lambda_{is}$. In particular, the feature measures $P_i$ are treated as probabilities that the feature is present at the pixel and the alignment measures $M_{is}$ are treated as probabilities that there is alignment between the normale to the feature and the analysis beam. On this basis, the feature measures $P_i$ and the alignment measures $M_{is}$ are combined using probability rules.

As an example and for simplicity omitting the index s from the equation, the relative weight $\lambda_1$ for the first image 2 (i=1) in the case that there are three images 2 to be combined is calculated in accordance with the equation:

$$\lambda_1 = \left[ P_1 \bar{P_2} \bar{P_3} + P_1 P_2 \bar{P_3} M_1 \bar{M_2} + P_1 \bar{P_2} P_3 M_1 \bar{M_3} + P_1 P_2 P_3 M_1 \bar{M_2} \bar{M_3} \right] + \cdots$$

$$\cdots + \frac{1}{2} \left[ P_1 P_2 \bar{P_3} M_1 M_2 + P_1 \bar{P_2} P_3 M_1 M_3 + P_1 P_2 P_3 M_1 \left( M_2 \bar{M_3} + \bar{M_2} M_3 \right) \right] + \cdots \quad (9)$$

$$\cdots + \frac{1}{3} \left[ P_1 P_2 P_3 \left( M_1 M_2 M_3 + \bar{M_1} \bar{M_2} \bar{M_3} \right) \right] + \frac{\alpha}{3} \left[ \bar{P_1} \bar{P_2} \bar{P_3} \right]$$

As conventional in the field of probability, the bars over P and M represent (1-P) and (1-M), respectively. The relative weights $\lambda_2$ and $\lambda_3$ for image the other images 2 is given by cycling the indices for the three images 2. Similarly, the equation may be generalised for any number of images 2.

Although this equation is complicated, the four main parts in the four sets of square brackets can be understood as follows.

The first part represents the probability of the first image 2 being the only one containing non-significant structural information.

The second part represents the probability of having two images, one of them being the first image 2, contributing a non-speckle value and thus being weighted by their alignment values.

The third part represents the probability of having structural information in all three images 2.

Finally, the last part represents the probability of there being no significant structural information, e.g. pure speckle, at the pixel in question, that is the probability that no image 2 contains structural information, so the feature measures of all the images are low. The same term is present in the equivalent equation of the relative weight $\lambda_i$ for each image 2 and so provides relative weights $\lambda_i$ which are equal.

The coefficient $\alpha$ can be used for noise reduction and can be selected to have any value in the range $0 \leq \alpha \leq 1$. In particular, $\alpha=1$ corresponds to an averaging of all images 2, that is the same effect produced by average compounding but in this case applied only to regions with no feature information. When $\alpha=1$, the relative weights $\lambda_i$ of all the images 2 sum to one. However, when $\alpha<1$ the relative weights $\lambda_i$ of all the images 2 sum to a value which is generally less than one, thereby reducing the amount of speckle in the combined image, and the extreme case that $\alpha=0$ produces a total elimination of detected speckle. Thus the selection of the constant $\alpha$ allows control of the amount of speckle reduction depending on the application. For visual diagnosis, it can be dangerous to remove information from the original image, as important information could be there, so a high value of $\alpha$ is used. For automatic segmentation algorithms, a drastic reduction of the speckle content can be advisable. Another possibility would be to keep the speckle removed from one image and display it separately, as significant information about aspects such as motion could be obtained from it.

Finally, in step 8 a combined image 9 is produced from the images 2 in accordance with the relative weights determined in step 7. In particular, each pixel of each image 2 is weighted by its respective relative weight $\lambda_i$ and the weighted images are summed. Furthermore this sum is performed in each spatial frequency band or scale s. Thus step 8 uses the spatial frequency bands of each image 2 derived using the same spatial frequency band-pass filters as used in step 3. Accordingly, in each spatial frequency band or scale s, the value $F_s$ of each pixel is calculated as:

$$F_s(x,y) = \Sigma\, \lambda_{is}(x,y) \cdot f_{is}(x,y) \qquad\qquad (10)$$

and the value Fc of each pixel in the combined image 9 is calculated as:

$$Fc(x,y) = \Sigma\, F_s(x,y) \qquad\qquad (11)$$

Optionally, equation (10) may be modified to incorporate a regularisation term which is a smoothing term that reduces the spatial variation, thus reducing noise. In particular, the value Fs of each pixel in the spatial frequency band or scale is calculated as the weighted linear combination set out in equation (10) plus the regularisation term. Thus the combined image is still produced by combining the pixels of each image 10 in accordance with the relative weights $\lambda_i$, but there is an additional term in the combination equation (10). This would allow for noisy measurements and/or error in the combination by weighting that term against the regularisation term. With this option, the downside from a theoretical perspective is that the equation/model is then no longer purely probabilistic, but the upside is that it might work better in practice if noise is present.

While the method described above is presently preferred, many variations may be made within the scope of the present invention, for example as follows.

A particular advantage of the presented technique is that the framework is independent on the actual selection of the feature measures and the alignment measures used to quantify structural information and orientation. For other applications, it would be possible to introduce alternatives, while keeping the main ideas set out above. Use of the monogenic signal image constitutes a convenient framework because it provides both structural and geometric information, but is not essential. Other types of phase-based analysis could be performed. More generally, there may be detected any phase feature which is invariant with local contrast. Similarly other alignment measures are possible.

Furthermore the way in which the relative weights are determined from the feature measures and the alignment measures may be varied considerably. A simple variation would be to use equation (4) only with the terms using the alignment measures M of each image 2. More complicated variations would be to derive the relative weights from the feature measures and the alignment measures using an entirely different mathematical approach.

Another possible variation is not to use the multi-scale approach of processing the images 2 in each spatial frequency band or scale s. In this case a single alignment measure M would be obtained for each image 2 representative of the alignment over all scales or a range of scales. This might be appropriate to study features of interest known to have a particular scale, for example blood vessels.

The present method has been tested on some actual images 2 as will now be described.

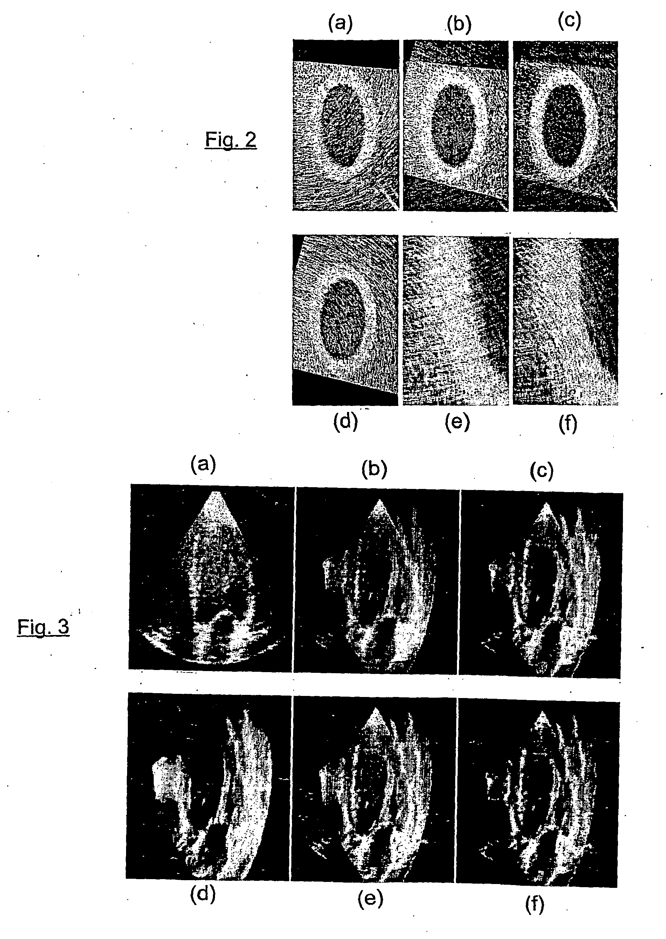

A first test used synthetic phantom images. The results are shown in Fig. 2. Simulated images were generated using the Field II program. An elliptical ring phantom was generated and scanned using a simulated 5 MHz sector probe. The images 2 were acquired with a difference in the orientation of the analysis beam of 80° are shown in Figs 2(a) and 2(d). Fig. 2(b) shows a compound image derived using the known averaging technique, whereas Fig. 2(c) shows the combined image 9 obtained using the present method described above. Figs. 2(e) and 2(f) show details of Figs. 2(b) and 2(c), respectively.

As can be seen from visual examination of Fig. 2, the present method provides improvement of contrast and better edge definition. This can also be shown analytically. Contrast to noise ratio (CNR) was calculated as the difference between the mean values of the ring and the background, divided by the standard deviation of background intensity. The CNR obtained with the present method was 37% higher than with intensity averaging.

An important indicator of the quality of the present method is its effect on the magnitude and direction of the intensity gradient at the object contours, this being a crucial parameter for edge-based segmentation methods. The intensity magnitude gradient in the direction normal to the ring contour has been calculated and shows increases of more than 30% where the differences in alignment are high.

A second test used RT3DUS images of the heart. The results are shown in Fig. 3. A mechanical arm (Faro Arm) was attached to a 3D probe (Philips) to obtain a 3D localization of the images 2. An initial calibration was performed by acquiring several scans of a known object (a plastic ball). Then 14 images were obtained by scanning two volunteers from both the apical and the parasternal windows. Fig. 3(a) shows the image 2 form the apical window and Fig. 3(d) shows the image 2 from the parasternal window. Fig. 3(b) shows a compound image derived using the known averaging technique, whereas Figs. 3(c), 3(e) and 3(f) shows the combined image 9 obtained using the present method described above with values of $\alpha$ of 0.9, 1, and 0.6, respectively. When compared to intensity averaging (Fig. 3(b)), the present method with $\alpha=1$ (Fig. 3(e)) shows a superior definition of significant heart structures. The smaller values of $\alpha$ show the speckle reduction behaviour of the algorithm. In Fig. 3(c) where $\alpha=0.9$ speckle is reduced without a decrease in contrast in the important features. In Fig. 3(f) where $\alpha=0.6$ only the most salient features are kept.

In summary, these results on simulated and real ultrasound images show a significant improvement of the present method over known averaging techniques, both in visual quality and quantitative measurements.

**Claims**

1. A method of combining a plurality of images (2) of a common object which images (2) are in registration with each other and have been acquired using an imaging technique which uses an analysis beam and is dependent on the angle of the analysis beam, relative to the object, the method comprising:

   deriving, in respect of each image (2), feature measures in respect of each pixel, being measures of the degree of detection of a phase feature which is invariant with the local contrast of the image (2);
   deriving, in respect of each image (2), alignment measures in respect of each pixel, being measures of the degree of alignment between the normal to said feature and the analysis beam;
   determining, in respect of each pixel, relative weights for the plurality of images (2) in correspondence with the feature measures for the plurality of images (2) in respect of the corresponding pixel, taking into account the alignment measures for the plurality of images (2); and
   producing a combined image (9) by combining the corresponding pixels of each image (2) in accordance with the determined relative weights.

2. A method according to claim 1, wherein the imaging technique is ultrasound echo imaging.

3. A method according to claim 1 or 2, wherein said feature measures are measures of a phase congruency feature.

4. A method according to any one of the preceding claims, wherein said step of determining, in respect of each pixel, relative weights for the plurality of images (2) comprises:

   for a pixel in respect of which one image (2) has a relatively high feature measure, providing relative weights which weight that one image predominately relative to the other images (2) in correspondence with the feature measures for the plurality of images (2) in respect of corresponding pixel; and
   for a pixel in respect of which a group of plural images (2) from the plurality of pixels have a relatively high feature, providing relative weights which weight that group of plural images (2) predominately relative to other images (2) not in the group, if any, the relative weights being in correspondence with the feature measures for the plurality of images (2) in respect of corresponding pixel biased by the alignment measures for the group of plural images in respect of corresponding pixel.

5. A method according to claim 4, wherein said step of determining, in respect of each pixel, relative weights for the plurality of images (2) further comprises:

   for a pixel in respect of which none of the images (2) has a relatively high feature measure, providing relative weights which are equal.

6. A method according to claim 5, wherein said equal relative weights sum to less than one.

7. A method according to any one of the preceding claims, wherein said step of determining, in respect of each pixel, relative weights for the plurality of images (2) comprises calculating relative weights as a function of the feature measures and the alignment measures using equations which are capable of providing a continuum of values for the relative weights.

8. A method according to claim 7, wherein the equations combine the feature measures and the alignment measures using probability rules taking the feature measures as probabilities that a feature is present at the respective pixel and taking the alignment measures as probabilities that there is alignment between the normal to said feature and the analysis beam at the respective pixel.

9. A method according to any one of the preceding claims, wherein said steps of deriving feature measures and alignment measures are performed using a phase based analysis of each image signal.

**10.** A method according to claim 9, wherein said steps of deriving feature measures and alignment measures comprise transforming each image into a monogenic signal image, and deriving both the feature measures and the alignment measures from the monogenic signal image.

**11.** A method according to any one of the preceding claims, wherein said alignment measures are the cosine of the angle between the analysis beam and the normal to the feature at the respective pixel.

**12.** A method according to any one of the preceding claims, wherein

said steps of deriving alignment measures and determining relative weights are performed for each of a plurality of spatial frequency bands, and
said of step of combining the plurality of images comprises
band-pass spatial filtering each image (2) into the plurality of spatial frequency bands,
in each spatial frequency band, combining the corresponding pixels of each image in accordance with the determined relative weights, and
compounding the combined pixels of each image (2) from all the spatial frequency bands.

**13.** A method according to any one of the preceding claims in combination with the step of acquiring the images (2) using the imaging technique.

**14.** A computer program executable by a computer system (10), the computer program, on execution by the computer system, being capable of causing the computer system (10) to execute a method according to any one of claims 1 to 12.

**15.** A storage medium storing in a form readable by a computer system (10) a computer program according to claim 14.

**Patentansprüche**

**1.** Verfahren zum Kombinieren mehrerer Bilder (2) eines gemeinsamen Objekts, wobei die Bilder (2) zueinander deckungsgleich sind und unter Verwenden eines Bildgebungsverfahrens aufgenommen wurden, das einen Analysestrahl verwendet und von dem Winkel des Analysestrahls im Verhältnis zum Objekt abhängig ist, wobei das Verfahren umfasst:

bezüglich jedes Bilds (2) Ableiten von Merkmalsmaßen bezüglich jedes Bildpunkts, die Maße des Grads der Detektion eines Phasenmerkmals sind, das mit dem lokalen Kontrast des Bilds (2) invariant ist,
bezüglich jedes Bilds (2) Ableiten von Ausrichtungsmaßen bezüglich jedes Bildpunkts, die Maße des Grads der Ausrichtung zwischen der Normalen zu dem Merkmal und dem Analysestrahl sind;
bezüglich jedes Bildpunkts Ermitteln von relativen Gewichten für die mehreren Bilder (2) in Übereinstimmung mit den Merkmalsmaßen für die mehreren Bilder (2) bezüglich des entsprechenden Bildpunkts, wobei die Ausrichtungsmaße für die mehreren Bilder (2) berücksichtigt werden; und
Erzeugen eines kombinierten Bilds (9) durch Kombinieren der entsprechenden Bildpunkte jedes Bilds (2) gemäß den ermittelten relativen Gewichten.

**2.** Verfahren nach Anspruch 1, **dadurch gekennzeichnet, dass** das Bildgebungsverfahren Ultraschallecho-Bildgebung ist.

**3.** Verfahren nach Anspruch 1 oder 2, **dadurch gekennzeichnet, dass** die Merkmalsmaße Maße eines Phasenkongruenzmerkmals sind.

**4.** Verfahren nach einem der vorhergehenden Ansprüche, **dadurch gekennzeichnet, dass** der Schritt des Ermittelns von relativen Gewichten für die mehreren Bilder (2) bezüglich jedes Bildpunkts umfasst:

für einen Bildpunkt, bezüglich dessen ein Bild (2) ein relativ hohes Merkmalsmaß aufweist, das Vorsehen relativer Gewichte, die dieses eine Bild im Verhältnis zu den anderen Bildern (2) in Übereinstimmung mit den Merkmalsmaßen für die mehreren Bilder (2) bezüglich eines entsprechenden Bildpunkts vorrangig gewichten; und
für einen Bildpunkt, bezüglich dessen eine Gruppe von mehreren Bildern (2) von den mehreren Bildpunkten ein relativ hohes Merkmal aufweist, das Vorsehen relativer Gewichte, die diese Gruppe von mehreren Bildern (2) im Verhältnis zu anderen Bildern (2), die nicht in der Gruppe sind, falls vorhanden, vorrangig gewichten, wobei die relativen Gewichte mit den Merkmalsmaßen für die mehreren Bilder (2) bezüglich eines entsprechenden Bildpunkts, der durch die Ausrichtungsmaße für die Gruppe mehrerer Bilder bezüglich des entsprechenden Bildpunkts beaufschlagt ist, in Übereinstimmung stehen.

**5.** Verfahren nach Anspruch 4, **dadurch gekennzeichnet, dass** der Schritt des Ermittelns von relativen Gewichten für die mehreren Bilder (2) bezüglich jedes Bildpunkts weiterhin umfasst:

für einen Bildpunkt, bezüglich dessen keines der Bilder (2) ein relativ hohes Merkmalsmaß aufweist, das Vorsehen relativer Gewichte, die gleich sind.

**6.** Verfahren nach Anspruch 5, **dadurch gekennzeichnet, dass** sich die gleichen relativen Gewichte auf weniger als Eins summieren.

**7.** Verfahren nach einem der vorhergehenden Ansprüche, **dadurch gekennzeichnet, dass** der Schritt des Ermittelns von relativen Gewichten für die mehreren Bilder (2) bezüglich jedes Bildpunkts das Berechnen relativer Gewichte als Funktion der Merkmalsmaße und der Ausrichtungsmaße unter Verwenden von Gleichungen umfasst, die eine ununterbrochene Folge von Werten für die relativen Gewichte vorsehen können.

**8.** Verfahren nach Anspruch 7, **dadurch gekennzeichnet, dass** die Gleichungen die Merkmalsmaße und die Ausrichtungsmaße unter Verwenden von Wahrscheinlichkeitsregeln kombinieren, die die Merkmalsmaße als Wahrscheinlichkeit nehmen, dass ein Merkmal an dem jeweiligen Bildpunkt vorhanden ist, und die Ausrichtungsmaße als Wahrscheinlichkeit nehmen, dass zwischen der Normale zu dem Merkmal und dem Analysestrahl an dem jeweiligen Bildpunkt eine Ausrichtung vorliegt.

**9.** Verfahren nach einem der vorhergehenden Ansprüche, **dadurch gekennzeichnet, dass** die Schritte des Ableitens von Merkmalsmaßen und Ausrichtungsmaßen unter Verwenden einer phasenbasierten Analyse jedes Bildsignals ausgeführt werden.

**10.** Verfahren nach Anspruch 9, **dadurch gekennzeichnet, dass** die Schritte des Ableitens von Merkmalsmaßen und Ausrichtungsmaßen das Umwandeln jedes Bilds in ein monogenes Signal und das Ableiten sowohl der Merkmalsmaße als auch der Ausrichtungsmaße aus dem monogenen Signalbild umfassen.

**11.** Verfahren nach einem der vorhergehenden Ansprüche, **dadurch gekennzeichnet, dass** die Ausrichtungsmaße der Cosinus des Winkels zwischen dem Analysestrahl und der Normalen zum Merkmal an dem jeweiligen Bildpunkt sind.

**12.** Verfahren nach einem der vorhergehenden Ansprüche, **dadurch gekennzeichnet, dass**
die Schritte des Ableitens von Ausrichtungsmaßen und des Ermittelns von relativen Gewichten für jedes von mehreren Ortsfrequenzbändern ausgeführt werden und
der Schritt des Kombinierens der mehreren Bilder umfasst:
Bandpass-Ortsfilterung jedes Bilds (2) in die mehreren Ortsfrequenzbänder,
in jedem Ortsfrequenzband Kombinieren der entsprechenden Bildpunkte jedes Bilds gemäß den ermittelten relativen Gewichten und
Zusammenführen der kombinierten Bildpunkte jedes Bilds (2) aus all den Ortsfrequenzbändern.

**13.** Verfahren nach einem der vorhergehenden Ansprüche kombiniert mit dem Schritt des Aufnehmens der Bilder (2) unter Verwenden des Bildgebungsverfahrens.

**14.** Von einem Computersystem (10) ausführbares Computerprogramm, wobei das Computerprogramm bei Ausführung durch das Computersystem das Computersystem (10) veranlassen kann, ein Verfahren nach einem der Ansprüche 1 bis 12 auszuführen.

**15.** Speichermedium, das in einer von einem Computersystem (10) lesbaren Form ein Computerprogramm nach Anspruch 14 speichert.

**Revendications**

1. Procédé de combinaison d'une pluralité d'images (2) d'un objet commun, lesquelles images (2) sont alignées les unes avec les autres et ont été acquises en utilisant une technique d'imagerie qui utilise un faisceau d'analyse et qui dépend de l'angle du faisceau d'analyse, par rapport à l'objet, le procédé consistant à:

   déduire, en relation avec chaque image (2), des mesures de caractéristique en relation avec chaque pixel, qui sont des mesures du degré de détection d'une caractéristique de phase qui ne varie pas avec le contraste local de l'image (2) ;
   déduire, en relation avec chaque image (2), des mesures d'alignement en relation avec chaque pixel, qui sont des mesures du degré d'alignement entre la normale à ladite caractéristique et le faisceau d'analyse ;
   déterminer, en relation avec chaque pixel, des coefficients de pondération relatifs pour la pluralité d'images (2) en correspondance avec les mesures de caractéristique pour la pluralité d'images (2) en relation avec le pixel correspondant, en prenant en compte les mesures d'alignement pour la pluralité d'images (2) ; et
   produire une image combinée (9) en combinant les pixels correspondants de chaque image (2) selon les coefficients de pondération relatifs déterminés.

2. Procédé selon la revendication 1, dans lequel la technique d'imagerie est l'imagerie à écho acoustique.

3. Procédé selon la revendication 1 ou 2, dans lequel lesdites mesures de caractéristique sont des mesures d'une caractéristique de congruence de phases.

4. Procédé selon l'une quelconque des revendications précédentes, dans lequel ladite étape de détermination, en relation avec chaque pixel, de coefficients de pondération relatifs pour la pluralité d'images (2) consiste à :

   pour un pixel en relation avec lequel une image (2) a une mesure de caractéristique relativement grande, fournir des coefficients de pondération relatifs qui pondèrent cette image principalement par rapport aux autres images (2) en correspondance avec les mesures de caractéristique pour la pluralité d'images (2) en relation avec le pixel correspondant ; et
   pour un pixel en relation avec lequel un groupe de plusieurs images (2) de la pluralité de pixels ont une caractéristique relativement grande, fournir des coefficients de pondération relatifs qui pondèrent ce groupe de plusieurs images (2) principalement par rapport aux autres images (2) qui ne sont pas dans le groupe, le cas échéant, les coefficients de pondération relatifs étant en correspondance avec les mesures de caractéristique pour la pluralité d'images (2) en relation avec le pixel correspondant influencé par les mesures d'alignement pour le groupe de plusieurs images en relation avec le pixel correspondant.

5. Procédé selon la revendication 4, dans lequel ladite étape de détermination, en relation avec chaque pixel, de coefficients de pondération relatifs pour la pluralité d'images (2) consiste en outre à :

   pour un pixel en relation avec lequel aucune des images (2) n'a de mesure de caractéristique relativement grande, fournir des coefficients de pondération relatifs qui sont égaux.

6. Procédé selon la revendication 5, dans lequel la somme desdits coefficients de pondération relatifs égaux est inférieure à un.

7. Procédé selon l'une quelconque des revendications précédentes, dans lequel ladite étape de détermination, en relation avec chaque pixel, de coefficients de pondération relatifs pour la pluralité d'images (2) consiste à calculer des coefficients de pondération relatifs en fonction des mesures de caractéristique et des mesures d'alignement en utilisant des équations qui sont capables de fournir des valeurs de continuum pour les coefficients de pondération relatifs.

8. Procédé selon la revendication 7, dans lequel les équations combinent les mesures de caractéristique et les mesures d'alignement en utilisant des règles de probabilité en prenant les mesures de caractéristique en tant que probabilités qu'une caractéristique soit présente au niveau du pixel respectif et en prenant les mesures d'alignement en tant que probabilités qu'il existe un alignement entre la normale à ladite caractéristique et le faisceau d'analyse au niveau du pixel respectif.

9. Procédé selon l'une quelconque des revendications précédentes, dans lequel lesdites étapes de déduction de mesures de caractéristique et de mesures d'alignement sont effectuées en utilisant une analyse basée sur la phase de chaque signal d'image.

10. Procédé selon la revendication 9, dans lequel lesdites étapes de déduction de mesures de caractéristique et de mesures d'alignement comprennent la transformation de chaque image en une image de signal monogénique, et la déduction à la fois des mesures de caractéristique et des mesures d'alignement à partir de l'image de signal monogénique.

11. Procédé selon l'une quelconque des revendications précédentes, dans lequel lesdites mesures d'alignement sont le cosinus de l'angle entre le faisceau d'analyse et la normale à la caractéristique au niveau du pixel respectif.

12. Procédé selon l'une quelconque des revendications précédentes, dans lequel

lesdites étapes de déduction de mesures d'alignement et de détermination de coefficients de pondération relatifs sont effectuées pour chacune d'une pluralité de bandes de fréquences spatiales, et
ladite étape de combinaison de la pluralité d'images consiste à
appliquer un filtrage spatial passe-bande à chaque image (2) dans la pluralité de bandes de fréquences spatiales, dans chaque bande de fréquences spatiales, combiner les pixels correspondants de chaque image selon les coefficients de pondération relatifs déterminés, et
composer les pixels combinés de chaque image (2) de toutes les bandes de fréquences spatiales.

13. Procédé selon l'une quelconque des revendications précédentes en combinaison avec l'étape d'acquisition des images (2) en utilisant la technique d'imagerie.

14. Programme d'ordinateur exécutable par un système informatique (10), le programme d'ordinateur, lors de son exécution par le système informatique, étant capable d'amener le système informatique (10) à exécuter un procédé selon l'une quelconque des revendications 1 à 12.

15. Support de mémorisation mémorisant, sous une forme pouvant être lue par un système informatique (10), un programme d'ordinateur selon la revendication 14.

Fig.1

(a) (b) (c)

Fig. 2

(d) (e) (f)

(a) (b) (c)

Fig. 3

(d) (e) (f)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Leotta et al.** Three-Dimensional Spatial Compounding of Ultrasound Scans with Weighting by Incidence Angle. *Ultrasonic Imaging,* January 2000, vol. 22 (1), 1-19
- 3-D spatial compounding of ultrasound images. **Rohling ; Gee ; Berman.** Medical Image Analysis. Oxford University Press, 1997, vol. 1, 177-193
- **Xiao ; Brady ; Noble ; Burcher ; English.** Non-rigid registration of 3D free-hand ultrasound images of the breast. *IEEE Transactions on Medical Imaging,* 2002, vol. 21 (4), 404-412

- **Morrone ; Owens.** Feature detection from local energy. *Pattern Recognition Letters,* 1987, vol. 6, 303-313
- **Felsberg ; Sommer.** The monogenic signal. *IEEE Transactions on Signal Processing,* December 2001, vol. 49 (12), 3136-3144
- **Boukerroui ; Noble ; Brady.** On the Choice of Band-Pass Quadrature Filters. *Journal of Mathematical Imaging and Vision,* July 2004, vol. 21 (1), 53-80
- Phase congruency: A low-level image invariant. **Kovesi.** Psychological Research. Springer-Verlag, 2000, vol. 64, 136-148